# EUROPÄISCHE PATENTSCHRIFT

(11) **EP 4 549 130 B1**
(45) Veröffentlichungstag und Bekanntmachung des Hinweises auf die Patenterteilung: **21.01.2026**
(21) Anmeldenummer: 24210130.1
(22) Anmeldetag: 31.10.2024
(51) Int. Cl.: B29C 49/42, B29C 49/06, B29K 67/00, B29L 31/00

(54) **VORRICHTUNG UND VERFAHREN ZUR HERSTELLUNG EINES BEHÄLTERS AUS EINEM VORFORMLING**
DEVICE AND METHOD FOR PRODUCING A CONTAINER FROM A PREFORM
DISPOSITIF ET PROCÉDÉ DE FABRICATION D'UN RÉCIPIENT À PARTIR D'UNE PRÉFORME

(30) Priorität: 03.11.2023 DE 102023130501
(43) Veröffentlichungstag der Anmeldung: 07.05.2025
(73) Patentinhaber: KHS GmbH, 44143 Dortmund (DE)
(72) Erfinder: Langhammer, Philipp, 44143 Dortmund (DE); Wenderdel, Sebastian, 44143 Dortmund (DE)
(74) Vertreter: Andrejewski - Honke Patent- und Rechtsanwälte Partnerschaft mbB

(56) Entgegenhaltungen:
- US-A1- 2003 211 256
- US-A1- 2006 121 222
- US-A1- 2020 171 730
- US-A1- 2021 245 416
- US-A1- 2023 150 183

## Beschreibung

Die Erfindung betrifft eine Vorrichtung und ein Verfahren zur Herstellung eines Behälters aus einem Vorformling, welcher eine durch eine Wandung umschlossenen und über eine Handhabungsöffnung zugänglichen Innenraum aufweist. Die Vorrichtung weist dazu eine Umformmaschine, insbesondere eine Streckblasmaschine auf, welche dazu eingerichtet ist den Vorformling zu erwärmen und zu einer Behältervorstufe mit einem Behälterinnenraum und einem dem Behälterinnenraum mit der Handhabungsöffnung verbindenden Halsabschnitt umzuformen. Die Umformmaschine weist ferner eine Behältervorstufenausgabe auf. Weiterhin ist zumindest eine eine Behältervorstufeneingabe aufweisende Trimmeinheit zum Durchtrennen des Halsabschnittes vorgesehen. Durch das Durchtrennen entsteht ein Behälter mit einer in oder an dem Halsabschnitt ausgebildeten und mit dem Behälterinnenraum verbundenen Behälteröffnung. Gattungsgemäse Vorrichtungen und Verfahren sind in den Patentschriften US2023/150183A1, US2020/171730A1, US2021/245416A1, US2003/211256A1 und US2006/121222A1 beschrieben.

Gattungsgemäße Vorrichtungen und Verfahren werden eingesetzt, wenn die für die spätere Benutzung vorgesehene Behälteröffnung nicht oder nur schwer für den Herstellungsprozess geeignet ist. Besonders große und/oder nicht-runde Behälteröffnungen lassen sich beispielsweise nur mit großem Aufwand in üblichen Streckblasmaschinen umformen. Ebenso ist die Handhabung in zusätzlichen Behandlungsanlagen, wie beispielsweise Beschichtungsanlagen nur mit großem Aufwand möglich.

Hierzu wurden Herstellungsverfahren und -Vorrichtungen entwickelt, bei denen zunächst eine Behältervorstufe als Zwischenprodukt hergestellt und gegebenenfalls beschichtet bzw. etikettiert wird. Diese so vorbereiteten Behältervorstufen werden gesammelt und zu einem späteren Zeitpunkt durch das Durchtrennen in oder an dem Halsabschnitt - in einem sogenannten Trimmprozess - zu den final vorgesehenen Behältern umgewandelt, bei denen eine Behälteröffnung mit den gewünschten geometrischen Eigenschaften - Formgebung und Abmessungen - entsteht. Der Trimmprozess wird üblicherweise über mechanische Klingen als Schneidwerkzeuge realisiert. Dieser ist jedoch - im Vergleich zur Behälterformung - langsam und belastet die Schneidwerkzeuge erheblich. Hohe Prozessgeschwindigkeiten führen zusätzlich zu einem starken Verschleiß an den Schneidwerkzeugen. Dies gilt insbesondere, wenn die Behälter als sogenannte "Hotfill"-Behälter ausgebildet sind, welche aufgrund einer hohen Verarbeitungstemperatur ein stark kristallines Materialgefüge aufweisen.

Vor diesem Hintergrund liegt der Erfindung die Aufgabe zugrunde, die Verarbeitungsgeschwindigkeit des Trimmprozesses zu erhöhen und gleichzeitig die Standzeit der Trimmeinheiten, insbesondere der darin verwendeten Schneidwerkzeuge zu verlängern. Gegenstand der Erfindung und Lösung dieser Aufgabe ist eine Vorrichtung nach Patentanspruch 1 sowie ein Verfahren nach Patentanspruch 7. Bevorzugte Ausgestaltungen sind in den abhängigen Unteransprüchen angegeben.

Ausgehend von der gattungsgemäßen Vorrichtung ist die Trimmeinheit erfindungsgemäß derart angeordnet, dass die Behältervorstufe im erwärmten Zustand, insbesondere mit einer Temperatur von zumindest 35 °C, bevorzugt zumindest 50 °C an die Behältervorstufeneingabe der Trimmeinheit übergeben werden kann. Die erfindungsgemäße Lösung besteht damit darin, den Trimmprozess im erwärmten Zustand der Behältervorstufen durchzuführen. Durch eine entsprechende Anordnung der Trimmeinheiten innerhalb der Vorrichtung wird dabei gewährleistet, dass die Behältervorstufe sich nicht an die Umgebungstemperatur - üblicherweise ca. 20 °C bis 30 °C - angleichen kann, sondern mit (z.B. von der Umformung herrührenden) Restwärme beladen an die Trimmeinheit übergeben wird. Aufgrund der erhöhten Temperatur der Behältervorstufe wird das Durchtrennen des Halsabschnitts erleichtert - auch und gerade bei kristallinen Hotfill-Behältern. Infolgedessen kommt es zu einem geringeren Verschleiß an der Trimmeinheit, insbesondere den dort verwendeten Schneidwerkzeugen, sodass sich eine längere Standzeit mit einem sauberen Schnittbild an der Behälteröffnung ergibt. Auch kann gegenüber konventionellen Anlagen der Durchsatz der Trimmeinheiten erhöht werden, ohne dadurch den Verschleiß wesentlich zu erhöhen.

Vorzugsweise weist die Trimmeinheit zumindest ein Schneidwerkzeug zum Durchtrennen der Behältervorstufe auf. Dabei handelt es sich bevorzugt um mechanische Schneidwerkzeuge, insbesondere Klingen. Aufgrund des geringeren mechanischen Widerstands einer erwärmten Behältervorstufe sind diese einem geringeren Verschleiß ausgesetzt.

Gemäß einer bevorzugten Ausgestaltung weist die Vorrichtung eine Beschichtungsanlage mit einer Beschichtungseingabe und einer Beschichtungsausgabe zur Beschichtung, insbesondere zur Plasma-beschichtung von Behältervorstufen und/oder Behältern auf. **In** die Beschichtungseingabe der Beschichtungseinlage können die unbeschichteten Behältervorstufen oder Behälter eingesetzt und innerhalb der Beschichtungsanlage mit einer Beschichtung versehen werden. Hierbei kann es sich insbesondere um eine Siliziumoxid-Beschichtung aus einem Plasmaabscheideprozess (eine sogenannte Plasmabeschichtung) handeln. Die Beschichtung verleiht den Behältervorstufen bzw. den Behältern erhöhte Barriereeigenschaften, insbesondere für Gas- und Stoffdiffusion mit Kohlensäure, Wasserdampf und/oder Sauerstoff.

Besonders bevorzugt ist die Beschichtungsanlage zwischen der Umform-maschine und der Trimmeinheit angeordnet. Dadurch kann die Tatsache genutzt werden, dass ein Beschichtungsprozess, insbesondere ein Plasmabeschichtungsprozess, einen höheren optimalen Temperaturbereich als der Trimmprozess hat. Gleichzeitig wird durch den während des Beschichtungsprozesses auftretenden Energieeintrag gewährleistet, dass die Behältervorstufe auch danach noch ausreichend erwärmt an die Trimmeinheiten übergeben werden kann.

Vorzugsweise ist zwischen einer Behälterbehandlungsmaschine - insbesondere Umformmaschine oder Beschichtungsanlage - und einer ohne eine weitere Behälterbehandlungsmaschine nachfolgenden Trimmeinheit keine auf die Behältervorstufe bzw. den Behälter wirkende Heizeinrichtung angeordnet. Die aus dem Behälterprozess stammende Restwärme kann dabei besonders bevorzugt genutzt werden. Insbesondere ist in diesem Bereich überhaupt keine (aktive) Temperiereinrichtung vorgesehen.

Besonders bevorzugt sind die Beschichtungsanlage und die Trimmeinheit unmittelbar aneinander angeschlossen bzw. miteinander verblockt. Davon spricht man, wenn die Beschichtungsausgabe unmittelbar oder mit nicht mehr als drei Handhabungseinheiten, insbesondere Transportsternen, an die Behältervorstufeneingabe der Trimmeinheit angeschlossen ist. Eine derartig direkte Übergabe verhindert einen zu starken Temperaturabfall vor dem Trimmprozess. Gleichzeitig kann durch die Verwendung von Handhabungseinheiten - d. h. die Behältervorstufen einzeln in diskreten Positionen transportierenden Transportsystemen - ein klar kalkulierbarer Einfluss auf die Temperatur sichergestellt werden. Dies steht im Gegensatz zu anderen Transportvorrichtungen wie z. B. Luftförderstrecken oder Transportbändern.

Alternativ oder zusätzlich kann zumindest eine Trimmeinheit zwischen der Umformmaschine und der Beschichtungsanlage angeordnet sein. Auch die Restwärme des Umformprozesses, insbesondere einer Streckblasformung, führt zu den erfindungsgemäßen Vorteilen eines verbesserten Trimmprozesses.

Ebenso kann eine Trimmeinheit mit der Streckblasmaschine verblockt sein. Dabei ist die Behältervorstufenausgabe der Streckblasmaschine unmittelbar oder mit nicht mehr als drei Handhabungseinheiten, vorzugsweise Transportsternen, an die Behältervorstufeneingabe der Trimmeinheit angeschlossen.

Im Rahmen der Erfindung ist es auch denkbar, dass mehr als eine Trimmeinheit in derselben Vorrichtung vorgesehen ist. Eine Vielzahl von Trimmeinheiten ermöglicht eine Erhöhung des Durchsatzes. Dies ist insbesondere deswegen vorteilhaft, da - trotz der erfindungsgemäßen Verbesserung - die Prozessgeschwindigkeit von Trimmeinheiten üblicherweise geringer ist als die maximal erzielbare Geschwindigkeit von Umformmaschinen wie z.B. Streckblasmaschinen und gegebenenfalls Beschichtungsanlagen. Die mehreren Trimmeinheiten können insbesondere unmittelbar hinter der Umformmaschine angeordnet und besonders bevorzugt an mehrere Behältervorstufenausgaben angeschlossen sein. Ohne Beschränkung der Erfindung können auch mehrere Trimmeinheiten vor und/oder hinter einer etwaigen Beschichtungsanlage vorgesehen sein.

Die Erfindung betrifft auch ein Verfahren zur Herstellung eines Behälters aus einem Vorformling, welcher eine durch eine Wandung umschlossenen und über eine Handhabungsöffnung zugänglichen Innenraum aufweist. Dabei wird der Vorformling in einer Umformmaschine, vorzugsweise Streckblasmaschine, erwärmt und zu einer Behältervorstufe mit einem Behälterinnenraum und einem den Behälterinnenraum mit der Handhabungsöffnung verbindenden Halsabschnitt umgeformt. Nachfolgend wird die Behältervorstufe - in einem sogenannten Trimmprozess - durch eine Trimmeinheit in oder an dem Halsabschnitt durchtrennt, sodass ein Behälter mit einer in oder an dem Halsabschnitt ausgebildeten und mit dem Behälterinnenraum verbundenen Behälteröffnung entsteht. Erfindungsgemäß ist dabei vorgesehen, dass der Halsabschnitt im - insbesondere gegenüber einer Umgebungstemperatur - erwärmten Zustand durchtrennt wird. Im Zuge der Erfindung wurde festgestellt, dass der Trimmprozess leichter an einer erwärmten Behältervorstufe durchzuführen ist - vor allem, wenn es sich dabei um einen sogenannten Hotfill-Behälter handelt.

Gemäß einer bevorzugten Ausgestaltung wird der Halsabschnitt bei einer Trimmtemperatur von zumindest 35 °C, vorzugsweise zumindest 50°C, besonders bevorzugt zumindest 60 °C, insbesondere zwischen 60 °C und 120 °C durchtrennt. In diesem bevorzugten Temperaturbereich wird das - insbesondere mechanische - Durchtrennen des Behältervorformlings erleichtert und die Abnutzung der Schneidwerkzeuge verringert.

Ohne Beschränkung der Erfindung lässt sich der Trimmprozess auch auf eine andere Weise als durch einen mechanischen Schneidprozess verwirklichen. Beispielsweise kann hier auch ein thermisches Schneideverfahren, insbesondere ein Laserschneideprozess verwendet werden. Aufgrund des bereits erwärmten Containers ist hierfür dann weniger thermische Energie, insbesondere eine geringere Strahlenergie des Schneidelasers erforderlich.

Gemäß einer besonders bevorzugten Ausgestaltung wird die Behältervorstufe von der Umformmaschine unmittelbar oder über nicht mehr als drei Handhabungseinheiten, vorzugsweise Transfersterne an die Trimmeinheiten zum Durchtrennen des Halsabschnitts übergeben. Die unmittelbare Übergabe - d. h. die Verblockung zwischen dem Streckblasprozess und dem Trimmprozess - ermöglicht eine effiziente Nutzung der Restwärme des Streckblasens. Hierdurch kann insbesondere auf eine separate Nachheizung der Behältervorstufe verzichtet werden.

Vorzugsweise wird der Behälter nach dem Durchtrennen mit einer Beschichtung, insbesondere einer Plasmabeschichtung versehen. Der Wärmeverlust aufgrund des Trimmprozesses ist geringfügig, sodass sich der entstandene Behälter noch in einem bevorzugten Temperaturbereich für die Beschichtung befindet. Auch wird dadurch verhindert, dass der von der Behältervorstufe verbleibende Rest (gegenüber dem Behälter) durch den Beschichtungsprozess verunreinigt wird. Somit wird die sortenreine und fremdstoffarme Wiederverwertbarkeit dieses Restes gewährleistet.

In einer alternativen Ausgestaltung des erfindungsgemäßen Verfahrens wird die Behältervorstufe nach dem Umformen und vor dem Durchtrennen mit einer Beschichtung, vorzugsweise einer Plasmabeschichtung versehen. Dabei wird ausgenutzt, dass die Behältervorstufe nach der Plasmabeschichtung immer noch eine ausreichende Restwärme hat, um den erfindungsgemäß vereinfachten Trimmprozess zu begünstigen. Die Verwendung eines Plasmabeschichtungsprozesses hat dabei den zusätzlichen Vorteil, dass diese aufgrund des zusätzlichen Energieeintrags einen geringeren Wärmeverlust während der Beschichtung beinhaltet bzw. sogar eine zusätzliche Erwärmung - insbesondere mit einem Temperatureintrag von ca. 20 K bis 40 K - hervorruft. Plasmabeschichtungen werden auch lediglich in einem derart geringfügigen Schichtdicke aufgetragen, dass das Recycling des Verschnitts (Rests) nicht wesentlich behindert wird.

Besonders bevorzugt weist die Behältervorstufe nach der Plasmabeschichtung eine Temperatur von zumindest 45 °C, insbesondere zumindest 60 °C auf. Insbesondere bewegt sie sich in einem Temperaturbereich zwischen 60 °C und 120 °C. Dieser Bereich garantiert zwar einerseits eine ausreichende mechanische Stabilität der Behältervorstufe zum Schneiden, während andererseits der Schneideprozess bereits gegenüber Raumtemperatur deutlich begünstigt wird.

Besonders bevorzugt wird die Behältervorstufe nach der Beschichtung unmittelbar oder mit nicht mehr als drei Handhabungseinheiten, vorzugsweise Transportsternen an die Trimmeinheit übergeben. In diesem Fall ist die Beschichtungsanlage mit der Trimmeinheit verblockt. Dies ermöglicht eine klar definierte und kalkulierbare Temperaturkurve zwischen der Beschichtungsanlage und der Trimmeinheit.

Ein einer bevorzugten Ausführungsform sind mehrere Trimmeinheiten vorgesehen, wobei die Behältervorstufen in den mehreren Trimmeinheiten, vorzugsweise alternierend durchtrennt werden. Hierdurch kann der Gesamtdurchsatz des Verfahrens gesteigert werden.

Vorzugsweise wird der nach dem Durchtrennen gegenüber dem Behälter verbleibende Rest der Behältervorstufe - der sogenannte Dom - anschließend einer Wiederverwertung zugeführt. Dieser besteht aus demselben Polymermaterial wie der Rest des Vorformlings und eignet sich daher besonders gut für eine sortenreine Wiederverwertung.

Die Erfindung erstreckt sich insbesondere auf Vorformlinge aus einem Polymermaterial, insbesondere Polyethylenterephthalat (PET).

Besonders bevorzugt wird der Rest eingeschmolzen und zur Herstellung von Vorformlingen wiederverwendet. Dieses sortenreine Recycling ermöglicht eine optimale Ausnutzung des zu der Verfügung gestellten Polymermaterials.

Ganz besonders bevorzugt wird der Vorformling bei einer Umformtemperatur zwischen 160 °C und 180 °C umgeformt. In diesem Bereich kann das Material des Vorformlings - insbesondere das Polymermaterial PET - zu einem sogenannten Hotfill-Container mit einer hohen Kristallinität des entstehenden Behälters (bzw. der entstehenden Behältervorstufe) umgeformt werden. Die hohe Kristallinität hat gute mechanische und optische Eigenschaften zur Folge.

Um dabei die mechanische Stabilität während des Umformprozesses zu gewährleisten, wird der Vorformling während der Umformung zu der Behältervorstufe an einer Innenseite gekühlt. Hierzu kann insbesondere eine Reckstange verwendet werden, welche während des Umformprozesses in den Innenraum der Vorformlinge eingeführt wird. Die Reckstange kann dabei aktiv gekühlt und/oder von einem Kühlmittel durchströmt werden bzw. ein Kühlmittel in die Behälterinnenseite einfüllen.

Ganz besonders bevorzugt ist vorgesehen, dass die Behältervorstufen und die in den Trimmeinheiten verwendeten Schneidewerkzeuge nicht beheizt werden. Durch die erfindungsgemäße Ausnutzung von Restwärme innerhalb des Umformprozesses und gegebenenfalls einer nachfolgenden Beschichtung ist eine solche aktive Heizung nicht erforderlich. Hierdurch kann der Materialaufwand für eine Heizvorrichtung und die dazu benötigte Energie eingespart werden.

Gemäß einer besonders bevorzugten Ausgestaltung des Verfahrens wird nach dem Trimmprozess, d. h. nach dem Durchtrennen eine Leckagemessung des Behälters durchgeführt. Dabei wird die Behälteröffnung abgedichtet und in dem Behälterinnenraum ein Über- oder Unterdruck angelegt. Durch den zeitlichen Verlauf dieses Druckunterschieds kann ein Leck - insbesondere durch unsaubere Schnittflächen an der Behälteröffnung - festgestellt werden. Besonders bevorzugt wird die Leckagemessung unmittelbar anschließend an den Trimmprozess durchgeführt. Hierzu wird ein sogenanntes Leakkarussell verwendet.

Die Erfindung wird nachfolgend anhand von lediglich Ausführungsbeispiele darstellenden Figuren erläutert. Es zeigen dabei schematisch:
Fig. 1A eine schematische Seitendarstellung eines Vorformlings,
Fig. 1B eine schematische Darstellung einer Behältervorstufe,
Fig. 1C eine schematische Darstellung eines nach dem erfindungsgemäßen Verfahren hergestellten Behälters und
Fig. 2A eine schematische Draufsicht einer erfindungsgemäßen Vorrichtung gemäß einer ersten Ausführungsform und
Fig. 2B eine der Fig. 2A entsprechende Ansicht bei einer zweiten Ausführungsform.

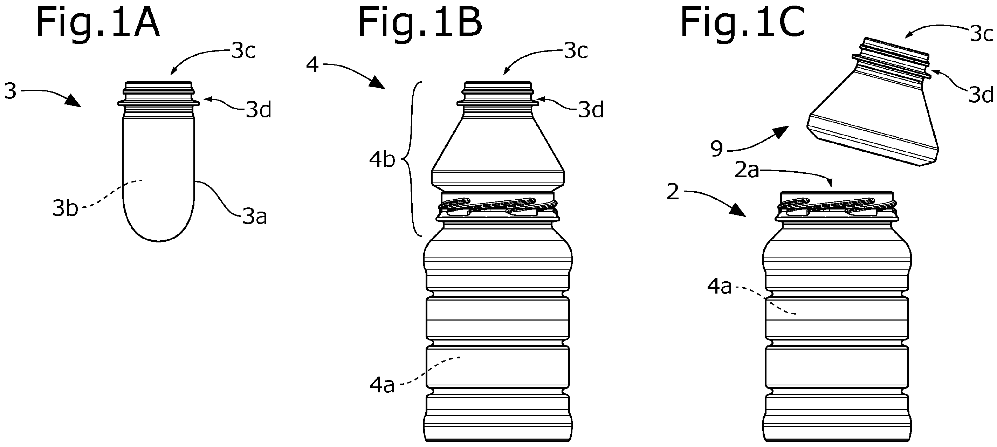

Die Erfindung bezieht sich auf eine Vorrichtung 1, 1' zur Herstellung von Behältern 2 aus Vorformlingen 3, wie diese in der Fig. 1A dargestellt ist. Die Vorformlinge 3 weisen ein durch eine Wandung 3a umschlossenen Innenraum 3b auf, welcher durch eine Handhabungsöffnung 3c zugänglich ist. Die Handhabungsöffnung 3c ist mit einem profilierten Rand 3d ausgebildet, an dem die Vorformlinge 3 bzw. nachfolgend hergestellte Behältervorstufen 4 mit Greifwerkzeugen der Vorrichtung 1 geführt werden können.

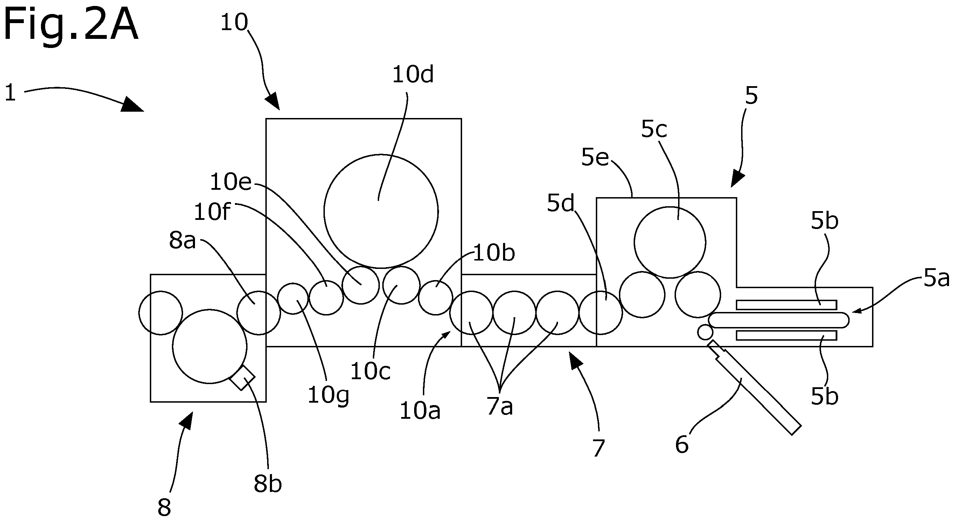

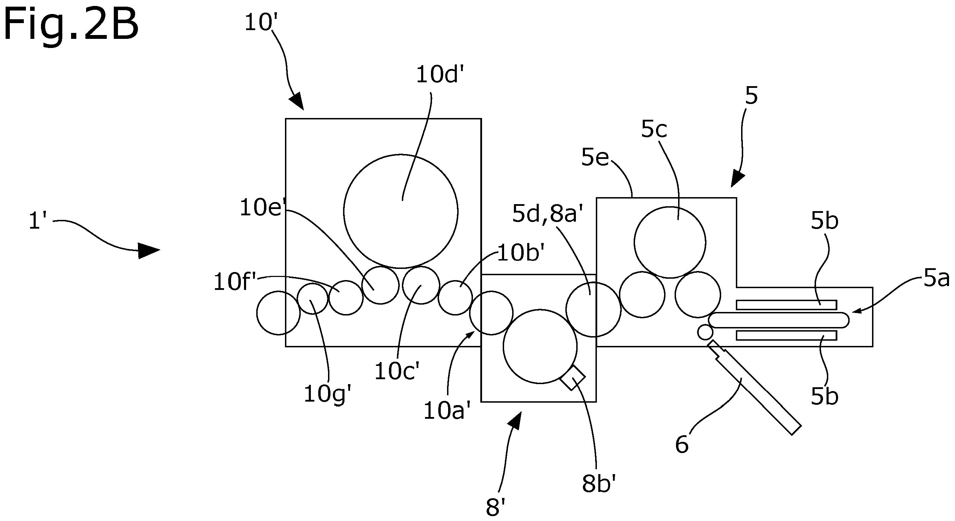

Die in den Figuren 2A und 2B dargestellten erfindungsgemäßen Vorrichtungen 1, 1' weisen jeweils eine Umformmaschine 5 auf, welche in diesen Ausführungsbeispielen als Streckblasmaschine ausgebildet ist. Die Umform-maschine 5 ist dazu eingerichtet, die Vorformlinge 3 von einer Vorformlingzuführung 6 zu übernehmen und in einem Heiztunnel 5a mit Heizelementen 5b auf eine Umformtemperatur zu erwärmen. Die erwärmten Vorformlinge 3 werden anschließend in Blasstationen eines Blasrades 5c zu einer in Fig. 1B dargestellten Behältervorstufe 4 umgeformt.

Die Behältervorstufe 4 weist dabei einen Behälterinnenraum 4a und einen den Behälterinnenraum 4a mit der von dem Vorformling 3 übernommenen Handhabungsöffnung 3c (einschließlich des profilierten Randes 3d) verbindenden Halsabschnitt 4b auf. Weiterhin ist eine Behältervorstufenausgabe 5d in Gestalt eines Transfersterns ausgebildet, mit der die geformten Behältervorstufen 4 aus der Umformmaschine 5 ausgegeben werden können. Die Behältervorstufenausgabe 5d ist dabei zumindest teilweise in einer Einhausung 5e der Umformmaschine 5 angeordnet.

In dem in Fig. 2A dargestellten Ausführungsbeispiel werden die Behältervorstufen 4 von einer Transfervorrichtung 7 übernommen und weitergeleitet, welche eine Mehrzahl an aneinandergekoppelten Transfersternen 7a aufweist. Weiterhin umfasst die Vorrichtung 1,1' zumindest eine Trimmeinheit 8, 8' mit zumindest einer Behältervorstufeneingabe 8a, 8a' und einer Schneidvorrichtung 8b, 8b' zum Durchtrennen des Halsabschnitts 4b.

Das Ergebnis dieses Trimmprozesses ist in der Fig. 1C dargestellt. Dabei wird ein Behälter 2 ausgebildet, welche den Behälterinnenraum 4a von der Behältervorstufe 4 übernimmt. Dieser ist durch eine Behälteröffnung 2a zugänglich, welche durch eine Schnittfläche des Trimmprozesses berandet ist. Dabei verbleibt von der ursprünglichen Behältervorstufe 4 ein Rest 9, welcher die ursprüngliche Handhabungsöffnung 3c mit dem profilierten Rand umfasst. Dieser Rest 9 wird aus der Trimmeinheit 8, 8' ausgeschleust und einem Recycling zugeführt.

Erfindungsgemäß ist die Trimmeinheit 8, 8' in beiden Ausführungsbeispielen gemäß den Fig. 2A und 2B derart angeordnet, dass die Behältervorstufen 4 im erwärmten Zustand, insbesondere mit einer Temperatur von zumindest 35 °C an die Behältervorstufeneingabe 8a, 8a' der Trimmeinheit 8, 8' übergeben werden.

**In** dem ersten gezeigten Ausführungsbeispiel gemäß Fig. 2A weist die Vorrichtung 1 eine Beschichtungsanlage 10 in Form einer Plasmabeschichtungsanlage auf. Die Beschichtungsanlage 10 umfasst eine Beschichtungseingabe 10a zur Übernahme der Behältervorstufen 4 aus der Transfereinheit 7, ein erstes Wenderad 10b, um die Behältervorstufen von einer nach oben hin geöffneten Ausrichtung zu einer nach unten geöffneten Ausrichtung umzukehren. Die Behältervorstufen 4 werden anschließend über eine erste Gruppierstation 10c an ein Beschichtungsrad 10d übergeben. Dort werden Gruppen von mehreren, insbesondere vier Behältervorstufen 4 in umlaufenden Beschichtungsstationen mit einer Siliziumdioxid-Plasmabeschichtung versehen. Nach dem Abschluss Beschichtungsprozesses werden die nunmehr beschichteten Behältervorstufen 4 von dem Beschichtungsrad 13d durch eine zweite Gruppierstation 10e übernommen und einem zweiten Wenderad 10f zugeführt. Dort werden sie in die ursprüngliche - nach oben hin geöffnete - Orientierung zurückbewegt. Über ein Ausgaberad 10g der Beschichtungsanlage 10, werden die beschichteten Behältervorstufen 4 an die Behältervorstufeneingabe 8a der Trimmeinheit 8 übergeben. Dadurch sind die Beschichtungsanlage 10 und die Trimmeinheit 8 unmittelbar aneinander angeschlossen - d. h. miteinander verblockt.

In der Fig. 2B ist die umgekehrte Anordnung einer unmittelbar mit der Umformmaschine 5 verblockten Trimmeinheit 8' und einer ihrerseits unmittelbar an die Behälterausgabe der Trimmeinheiten 8' anschließenden Beschichtungsanlage 10` verblockt ist. Diese weist einen der Beschichtungsanlage 10 des ersten Ausführungsbeispiels entsprechenden Aufbau auf. Einander entsprechende Bezugszeichen sind dabei jeweils mit einem Hochkomma (') versehen.

### Bezugszeichenliste

- 1,1': Vorrichtung
- 2: Behälter
- 2a: Behälteröffnung
- 3: Vorformling
- 3a: Wandung
- 3b: Innenraum
- 3c: Handhabungsöffnung
- 3d: profilierter Rand
- 4: Behältervorstufe
- 4a: Behälterinnenraum
- 4b: Halsabschnitt
- 5: Umformmaschine
- 5a: Heiztunnel
- 5b: Heizvorrichtung
- 5c: Umformrad
- 5d: Ausgaberad
- 5e: Einhausung
- 6: Vorformlingzuführung
- 7: Transportvorrichtung
- 7a: Transportstern
- 8, 8': Trimmeinheit
- 8a: Behältervorstufeneingabe
- 8b, 8b': Schneidwerkzeug
- 9: Rest
- 10, 10': Beschichtungsanlage
- 10a, 10a': Beschichtungseingabe
- 10b, 10b': erstes Wenderad
- 10c, 10c': erste Gruppierstation
- 10d, 10d': Beschichtungsrad
- 10e, 10e': zweite Gruppierstation
- 10f, 10f': zweites Wenderad
- 10g, 10g': Beschichtungsausgabe

## Patentansprüche

1. Vorrichtung (1, 1') zur Herstellung eines Behälters (2) aus einem Vorformling (3), welcher eine durch eine Wandung (3a) umschlossenen und über eine Handhabungsöffnung (3c) zugänglichen Innenraum (3b) aufweist,
- mit einer Umformmaschine (5), welche dazu eingerichtet ist den Vorformling (3) zu erwärmen und zu einer Behältervorstufe (4) mit einem Behälterinnenraum (4a) und einem den Behälterinnenraum (4a) mit der Handhabungsöffnung (3c) verbindenden Halsabschnitt (4b) umzuformen und eine Behältervorstufenausgabe (5d) aufweist,
- und mit zumindest einer eine Behältervorstufeneingabe (8a, 8a') aufweisenden Trimmeinheit (8, 8') zum Durchtrennen des Halsabschnitts (4b), sodass ein Behälter (2) mit einer in oder an dem Halsabschnitt (4b) ausgebildeten und mit dem Behälterinnenraum (4a) verbundenen Behälteröffnung (2a) entsteht,
**dadurch gekennzeichnet, dass** die Trimmeinheit (8) derart angeordnet ist, dass die Behältervorstufe (4) im erwärmten Zustand, mit einer Temperatur von zumindest 35 °C, an die Behältervorstufeneingabe (8a, 8a') der Trimmeinheit (8, 8') übergeben werden kann.

2. Vorrichtung (1, 1') nach dem vorangegangenen Anspruch, **gekennzeichnet durch** eine Beschichtungsanlage (10, 10') mit einer Beschichtungseingabe (10a, 10a') und einer Beschichtungsausgabe (10g, 10g') zur Beschichtung, insbe-sondere Plasmabeschichtung, von Behältervorstufen (4) und/oder Behältern (2).

3. Vorrichtung (1) nach dem vorangegangenen Anspruch, **dadurch gekennzeichnet, dass** die Beschichtungsanlage (10) zwischen der Umform-maschine (5) und der Trimmeinheit (8) angeordnet ist.

4. Vorrichtung (1) nach dem vorangegangenen Anspruch, **dadurch gekennzeichnet, dass** die Beschichtungsausgabe (10g) unmittelbar oder mit nicht mehr als drei Handhabungseinheiten, vorzugsweise Transportsternen, an die Behältervorstufeneingabe (8a) der Trimmeinheit (8) angeschlossen ist.

5. Vorrichtung (1') nach einem der vorangegangenen Ansprüche 2 oder 3, **dadurch gekennzeichnet, dass** zumindest eine Trimmeinheit (8') zwischen der Umformmaschine (5) und der Beschichtungsanlage (10') angeordnet ist.

6. Vorrichtung (1, 1') nach einem der vorangegangenen Ansprüche, **dadurch gekennzeichnet, dass** die Behältervorstufenausgabe (5d) der Umform-maschine (5) unmittelbar oder mit nicht mehr als drei Handhabungseinheiten, vorzugsweise Transportsternen, an die Behältervorstufeneingabe (8a, 8a') angeschlossen ist.

7. Verfahren zur Herstellung eines Behälters (2) aus einem Vorformling (3), welcher eine durch eine Wandung (3a) umschlossenen und über eine Handhabungsöffnung (3c) zugänglichen Innenraum (3b) aufweist,
wobei der Vorformling (3) in einer Umformmaschine (5) erwärmt und zu einer Behältervorstufe (4) mit einem Behälterinnenraum (4a) und einem den Behälterinnenraum (4a) mit der Handhabungsöffnung (3c) verbindenden Halsabschnitt (4b) umgeformt wird,
und wobei die Behältervorstufe (4) nachfolgend durch eine Trimmeinheit (8, 8') in dem Halsabschnitt (4b) durchtrennt wird, sodass ein Behälter (2) mit einer in oder an dem Halsabschnitt (4b) ausgebildeten und mit dem Behälterinnen-raum (4a) verbundenen Behälteröffnung (2a) entsteht,
**dadurch gekennzeichnet, dass** der Halsabschnitt (4b) im erwärmten Zustand bei einer Trimmtemperatur von zumindest 35°C durchtrennt wird.

8. Verfahren nach dem vorangegangenen Anspruch, **dadurch gekennzeichnet, dass** die der Halsabschnitt (4b) bei einer Trimmtemperatur von zumindest 35 °C, vorzugsweise zumindest 60 °C, insbesondere zwischen 60 °C und 120 °C durchtrennt wird.

9. Verfahren nach einem der vorangegangenen Ansprüche 7 oder 8, **dadurch gekennzeichnet, dass** die Behältervorstufe (4) von der Umformmaschine (5) unmittelbar oder über nicht mehr als drei Handhabungseinheiten, vorzugsweise Transfersterne, an die Trimmeinheit (8') übergeben wird.

10. Verfahren nach einem der vorangegangenen Ansprüche 7 bis 9, **dadurch gekennzeichnet, dass** der Behälter (2) nach dem Durchtrennen mit einer Beschichtung, insbesondere Plasmabeschichtung versehen wird.

11. Verfahren nach einem der vorangegangenen Ansprüche 7 bis 9, **dadurch gekennzeichnet, dass** die Behältervorstufe (4) nach dem Umformen und vor dem Durchtrennen mit einer Beschichtung, vorzugsweise einer Plasmabeschichtung versehen wird.

12. Verfahren nach dem vorangegangenen Anspruch, **dadurch gekennzeichnet, dass** die Behältervorstufe (4) nach der Beschichtung, insbesondere Plasmabe-schichtung eine Temperatur von zumindest 45 °C, insbesondere zumindest 60 °C aufweist.

13. Verfahren nach einem der vorangegangenen Ansprüche 11 oder 12, **dadurch gekennzeichnet, dass** die Behältervorstufe (4) nach der Beschichtung unmittelbar oder mit nicht mehr als drei Handhabungseinheiten, vorzugsweise Transportsternen, an die Trimmeinheit (8) übergeben wird.

14. Verfahren nach einem der vorangegangenen Ansprüche 7 bis 13, **dadurch gekennzeichnet, dass** mehrere Trimmeinheiten (8, 8') vorgesehen sind und die Behältervorstufen (4) in den mehreren Trimmeinheiten (8, 8'), vorzugsweise alternierend, durchtrennt werden.

15. Verfahren nach einem der vorangegangenen Ansprüche 7 bis 14, dadurch gekenn¬zeichnet, dass der nach dem Durchtrennen gegenüber dem Behälter (2) verbleibende Rest (9) der Behältervorstufe (4) anschließend einer Wieder-verwertung zugeführt wird.

16. Verfahren nach dem vorangegangenen Anspruch, **dadurch gekennzeichnet, dass** der Rest (9) eingeschmolzen und zur Herstellung von Vorformlingen (3) verwendet wird.

17. Verfahren nach einem der vorangegangenen Ansprüche 7 bis 16, **dadurch gekennzeichnet, dass** der Vorformling (3) bei einer Temperatur zwischen 160 °C und 180 °C umgeformt werden.

18. Verfahren nach einem der vorangegangenen Ansprüche 7 bis 17, **dadurch gekennzeichnet, dass** der Vorformling (3) bei der Umformung zu der Behältervorstufe (4) an einer Innenseite gekühlt wird, insbesondere durch Zuführung von Kühlmittel durch eine hohle Reckstange gekühlt wird.

19. Verfahren nach einem der vorangegangenen Ansprüche 7 bis 18, **dadurch gekennzeichnet, dass** die Behältervorstufe (4) und die in der Trimmeinheiten (8, 8') verwendeten Schneidwerkzeuge (8a, 8a') nicht beheizt werden.

20. Verfahren nach einem der vorangegangenen Ansprüche 7 bis 19, **dadurch gekennzeichnet, dass** nach dem Durchtrennen, insbesondere unmittelbar anschließend eine Leckagemessung der Behälter (2) durchgeführt wird.

## Claims

1. A device (1, 1') for manufacturing a container (2) from a preform (3) which comprises an interior space (3b) enclosed by a wall (3a) and accessible via a handling opening (3c),
- with a forming machine (5), which is configured to heat the preform (3) and to form it into a container precursor (4) with a container interior space (4a) and a neck section (4b) connecting the container interior space (4a) with the handling opening (3c) and comprises a container precursor output (5d),
- and with at least one trimming unit (8, 8') comprising a container precursor input (8a, 8a') for cutting through the neck section (4b) so that a container (2) with a container opening (2a) formed in or on the neck section (4b) and connected to the container interior space (4a) is formed,
**characterized in that** the trimming unit (8) is arranged in such a way that the container precursor (4) in the heated state, at a temperature of at least 35°C, can be transferred to the container precursor input (8a, 8a') of the trimming unit (8, 8').

2. The device (1, 1') according to the preceding claim, **characterized by** a coating system (10, 10') with a coating input (10a, 10a') and a coating output (10g, 10g') for coating, in particular, plasma coating, of container precursors (4) and/or containers (2).

3. The device (1) according to the preceding claim, **characterized in that** the coating system (10) is arranged between the forming machine (5) and the trimming unit (8).

4. The device (1) according to the preceding claim, **characterized in that** the coating output (10g) is connected directly or with no more than three handling units, preferably transport stars, to the container precursor input (8a) of the trimming unit (8)

5. The device (1') according to any one of the preceding Claims 2 or 3, **characterized in that** at least one trimming unit (8') is arranged between the forming machine (5) and the coating system (10').

6. The device (1, 1') according to any one of the preceding claims, **characterized in that** the container precursor output (5d) of the forming machine (5) is connected directly or with no more than three handling units, preferably transport stars, to the container precursor input (8a, 8a').

7. A method for manufacturing a container (2) from a preform (3) which comprises an interior space (3b) enclosed by a wall (3a) and accessible via a handling opening (3c),
wherein the preform (3) is heated in a forming machine (5) and formed into a container precursor (4) with a container interior space (4a) and a neck section (4b) connecting the container interior space (4a) with the handling opening (3c),
and wherein the container precursor (4) is subsequently cut by a trimming unit (8, 8') in the neck section (4b) so that a container (2) is formed with a container opening (2a) formed in or on the neck section (4b) and connected to the container interior space (4a),
**characterized in that** the neck section (4b) is cut in the heated state at a trimming temperature of at least 35°C.

8. The method according to the preceding claim, **characterized in that** the neck section (4b) is cut at a trimming temperature of at least 35°C, preferably at least 60°C, in particular, between 60°C and 120°C.

9. The method according to any one of the preceding Claims 7 or 8, **characterized in that** the container precursor (4) is transferred from the forming machine (5) to the trimming unit (8') directly or via no more than three handling units, preferably transfer stars.

10. The method according to any one of the preceding Claims 7 to 9, **characterized in that** the container (2) is provided with a coating, in particular, a plasma coating, after cutting.

11. The method according to any one of the preceding Claims 7 to 9, **characterized in that** the container precursor (4) is provided with a coating, preferably a plasma coating, after forming and before cutting.

12. The method according to the preceding claim, **characterized in that** the container precursor (4) comprises a temperature of at least 45°C, in particular, at least 60°C after coating, in particular, plasma coating.

13. The method according to any one of the preceding Claims 11 or 12, **characterized in that** the container precursor (4) is transferred to the trimming unit (8) immediately after coating or with not more than three handling units, preferably transport stars.

14. The method according to any one of the preceding Claims 7 to 13, **characterized in that** a plurality of trimming units (8, 8') are provided and the container precursors (4) are cut in the plurality of trimming units (8, 8'), preferably alternatingly.

15. The method according to any one of the preceding Claims 7 to 14, **characterized in that** the remainder (9) of the container precursor (4) remaining after cutting from the container (2) is subsequently fed to be recycled.

16. the method according to the preceding claim, **characterized in that** the remainder (9) is melted down and used for manufacturing preforms (3).

17. The method according to any one of the preceding Claims 7 to 16, **characterized in that** the preform (3) is formed at a temperature between 160°C and 180°C.

18. The method according to any one of the preceding Claims 7 to 17, **characterized in that** the preform (3) is cooled on an inner side during forming to the container precursor (4), in particular, cooled by the supply of cooling medium through a hollow stretching bar.

19. The method according to any one of the preceding Claims 7 to 18, **characterized in that** the container precursor (4) and the cutting tools (8a, 8a') used in the trimming units (8, 8') are not heated.

20. The method according to any one of the preceding claims 7 to 19, **characterized in that** after cutting, in particular, immediately afterwards, a leakage measurement of the containers (2) is carried out.

## Revendications

1. Dispositif (1, 1'), destiné à fabriquer un contenant (2) à partir d'une préforme (3), laquelle comporte un espace intérieur (3b) entouré par une paroi (3a) et accessible par l'intermédiaire d'un orifice de manipulation (3c),
- pourvu d'une machine de formage (5), laquelle est configurée pour chauffer la préforme (3) et pour la former en un précurseur de contenant (4), doté d'un espace intérieur (4a) de contenant et d'un segment de col (4b) reliant l'espace intérieur (4a) de contenant avec l'orifice de manipulation (3c) et comporte une sortie (5d) de précurseur de contenant,
- et pourvu d'au moins une unité de découpage (8, 8') comportant une entrée (8a, 8a') de précurseur de contenant, destinée à sectionner le segment de col (4b), de sorte à donner naissance à un contenant (2) doté d'un orifice (2a) de contenant conçu dans ou sur le segment de col (4b) et relié avec l'espace intérieur (4a) de contenant,
**caractérisé en ce que** l'unité de découpage (8) est placée de telle sorte que lorsqu'il est chauffé, le précurseur de contenant (4) puisse être transféré à une température d'au moins 35 °C à l'entrée (8a, 8a') de précurseur de contenant de l'unité de découpage (8, 8').

2. Dispositif (1, 1') selon la revendication précédente, **caractérisé par** une installation de revêtement (10, 10'), dotée d'une entrée de revêtement (10a, 10a') et d'une sortie de revêtement (10g, 10g'), destinée à revêtir, notamment à revêtir au plasma des précurseurs de contenants et / ou des contenants (2).

3. Dispositif (1) selon la revendication précédente, **caractérisé en ce que** l'installation de revêtement (10) est placée entre la machine de formage (5) et l'unité de découpage (8).

4. Dispositif (1) selon la revendication précédente, **caractérisé en ce que** la sortie de revêtement (10g) est raccordée directement ou par pas plus de trois unités de manipulation, de préférence systèmes de transport en étoile sur l'entrée (8a) de précurseurs de contenants de l'unité de découpage (8).

5. Dispositif (1') selon l'une quelconque des revendications 2 ou 3 précédentes, **caractérisé en ce qu'**au moins une unité de découpage (8') est placée entre la machine de formage (5) et l'installation de revêtement (10').

6. Dispositif (1, 1') selon l'une quelconque des revendications précédentes, **caractérisé en ce que** la sortie (5d) de précurseurs de contenant de la machine de formage (5) est raccordée directement ou par plus de trois unités de manipulation, de préférence systèmes de transport en étoile sur l'entrée (8a, 8a') de précurseurs de contenant.

7. Procédé, destiné à fabriquer un contenant (2) à partir d'une une préforme (3), laquelle comporte un espace intérieur (3b) entouré par une paroi (3a) et accessible par l'intermédiaire d'un orifice de manipulation (3c),
lors duquel l'on chauffe la préforme (3) dans une machine de formage (5) et on la forme en un précurseur de contenant (4) doté d'un espace intérieur (4a) de contenant et d'un segment de col (4b) reliant l'espace intérieur (4a) de contenant avec l'orifice de manipulation (3c),
et lors duquel, l'on sectionne par la suite le précurseur de contenant (4) à l'aide d'une unité de découpage (8, 8') dans le segment de col (4b), de sorte à donner naissance à un contenant (2) doté d'un orifice (2a) de contenant conçu dans ou sur le segment de col (4b) et relié avec l'espace intérieur (4a) de contenant,
**caractérisé en ce que** l'on sectionne le segment de col (4b) lorsqu'il est chauffé à une température de découpage d'au moins 35 °C.

8. Procédé selon la revendication précédente, **caractérisé en ce que** l'on sectionne le segment de col (4b) à une température de découpage d'au moins 35 °C, de préférence d'au moins 60 °C, notamment comprise entre 60 °C et 120 °C.

9. Procédé selon l'une quelconque des revendications 7 ou 8 précédentes, **caractérisé en ce que** le précurseur de contenant (4) est transféré par la machine de formage (5) directement ou par l'intermédiaire de pas plus de trois unités de manipulation, de préférence systèmes de transport en étoile à l'unité de découpage (8').

10. Procédé selon l'une quelconque des revendications 7 à 9, **caractérisé en ce qu'**après le sectionnement, l'on munit le contenant (2) d'un revêtement, notamment d'un revêtement au plasma.

11. Procédé selon l'une quelconque des revendications 7 à 9, **caractérisé en ce qu'**après le formage et avant le sectionnement, l'on munit le précurseur de contenant (4) d'un revêtement, de préférence d'un revêtement au plasma.

12. Procédé selon la revendication précédente, **caractérisé en ce qu'**après le revêtement, notamment le revêtement au plasma, le précurseur de contenant (4) présente une température d'au moins 45 °C, notamment d'au moins 60 °C.

13. Procédé selon l'une quelconque des revendications 11 ou 12, **caractérisé en ce qu'**après le revêtement, le précurseur de contenant (4) est transféré directement ou par pas plus de trois unités de manipulation, de préférence systèmes de transport en étoile à l'unité de découpage (8).

14. Procédé selon l'une quelconque des revendications 7 à 13, **caractérisé en ce que** plusieurs unités de découpage (8, 8') sont prévues et **en ce que** les précurseurs de contenants (4) sont sectionnés, de préférence alternativement dans les plusieurs unités de découpage (8, 8').

15. Procédé selon l'une quelconque des revendications 7 à 14, **caractérisé en ce que** l'on amène par la suite à un recyclage le reste (9) du précurseur de contenant (4) subsistant après le sectionnement par rapport au contenant (2).

16. Procédé selon la revendication précédente, **caractérisé en ce que** l'on fait fondre le reste (9) et on l'utilise pour la fabrication de préformes (3).

17. Procédé selon l'une quelconque des revendications 7 à 16, **caractérisé en ce que** l'on forme la préforme (3) à une température comprise entre 160 °C et 180 °C.

18. Procédé selon l'une quelconque des revendications 7 à 17, **caractérisé en ce qu'**à l'aide d'une barre d'étirage creuse, l'on refroidit sur une face intérieure la préforme (3) lors du formage, pour obtenir le précurseur de contenant (4), notamment par amenage d'agents réfrigérants.

19. Procédé selon l'une quelconque des revendications 7 à 18, **caractérisé en ce que** l'on ne chauffe pas le précurseur de contenant (4), ni les outils de coupe (8a, 8a') utilisés dans les unités de découpage (8, 8').

20. Procédé selon l'une quelconque des revendications 7 à 19, **caractérisé en ce qu'**après le sectionnement, notamment à sa suite, l'on procède à une mesure des fuites sur le contenant (2).
